# EUROPÄISCHE PATENTSCHRIFT

(11) **EP 4 463 327 B1**
(45) Veröffentlichungstag und Bekanntmachung des Hinweises auf die Patenterteilung: **01.10.2025**
(21) Anmeldenummer: 22843119.3
(22) Anmeldetag: 15.12.2022
(51) Int. Cl.: B60C 9/07, B60C 9/17, B60C 9/02, B60C 9/04

(54) **GEWICHTSOPTIMIERTER FAHRZEUGLUFTREIFEN**
WEIGHT-OPTIMIZED AIR VEHICLE TIRES
PNEUSMATIQUE À POIDS OPTIMISÉ

(30) Priorität: 14.01.2022 DE 102022200388
(43) Veröffentlichungstag der Anmeldung: 20.11.2024
(73) Patentinhaber: Continental Reifen Deutschland GmbH, 30175 Hannover (DE)
(72) Erfinder: AHMED, Owais, 30175 Hannover (DE); BERGER, Christoph, 30175 Hannover (DE)
(74) Vertreter: Continental Corporation
(86) Internationale Anmeldenummer: PCT/DE2022/200298
(87) Internationale Veröffentlichungsnummer: WO 2023/134819

(56) Entgegenhaltungen:
- EP-A1- 1 212 190
- EP-B1- 1 212 190
- DE-T5- 112017 002 418
- JP-A- 2001 246 910
- JP-A- H03 292 202
- US-A- 3 568 749

## Beschreibung

Die Erfindung betrifft einen Fahrzeugluftreifen, welcher bei einem vorteilhaft niedrigen Gewicht eine hohe Belastungsresistenz aufweist.

Klassische Fahrzeugluftreifen verfügen über eine Reifenkarkasse aus einer oder mehreren Karkasslagen, deren gummierte Festigkeitsträger sich zumeist von Reifenwulst zu Reifenwulst durch die Reifenkarkasse erstrecken und dabei im Wesentlichen mit der Umfangsrichtung einen Kordwinkel von 90° einschließen. Diese Fahrzeugluftreifen werden auch als Radialreifen bezeichnet. **In** radialer Richtung außen zu der Reifenkarkasse weisen entsprechende Radialreifen einen Laufstreifen auf, welcher für den späteren Kontakt mit der Fahrbahn vorgesehen ist. **In** vielen Fällen weisen Radialreifen zwischen dem Laufstreifen und der Reifenkarkasse eine oder mehrere Verstärkungslagen auf, beispielsweise Gürtellagen, welche wiederum gummierte Festigkeitsträger umfassen und dem Reifen unter anderem die notwendige Steifigkeit verleihen. Entsprechende zusätzliche Gürtellagen erhöhen jedoch das Gesamtgewicht des Fahrzeugluftreifens, was mit Blick auf die Fahreigenschaften, den Rollwiderstand und den Treibstoffverbrauch regelmäßig als nachteilig empfunden wird.

Ausgehend von den herkömmlichen Radialreifen wurde erkannt, dass die Steifigkeit sowie weitere relevante Reifeneigenschaften dadurch verbessert werden können, dass zumindest in einem unter dem Laufstreifen liegenden Zentralbereich der Reifenkarkasse von einer ideal radialen Anordnung abgewichen wird, sodass die gummierten Festigkeitsträger lediglich in den Seitenbereichen des Fahrzeugreifens einen radialen Verlauf aufweisen, im Zentralbereich der Reifenkarkasse jedoch einen Kordwinkel aufweisen, welcher sich deutlich von 90° unterscheidet. Hierdurch ist es vorteilhafterweise möglich, die Zahl der Verstärkungslagen, beispielsweise die Zahl der Gürtellagen, zwischen dem Laufstreifen und der Reifenkarkasse zu reduzieren, sodass leistungsfähige Fahrzeugluftreifen, welche im Bereich der Aufstandsfläche über die nötige Steifigkeit verfügen, auch bei Einsatz von lediglich einer Verstärkungslage bzw. in einigen Fällen auch gänzlich ohne Verstärkungslagen hergestellt werden können, was mit Blick auf die dadurch zu erreichende Gewichtsreduktion als besonders vorteilhaft empfunden wird.

Bei entsprechenden Fahrzeugluftreifen, die über maximal eine Verstärkungslage verfügen, wird jedoch die Haltbarkeit und die Belastungsresistenz häufig als unzureichend bewertet. Insbesondere weisen solche Fahrzeugluftreifen häufig einen unzureichenden Widerstand gegen eindringende Fremdpartikel auf.

Entsprechende Fahrzeugluftreifen sind aus dem Stand der Technik bekannt, beispielsweise aus der DE 11 2017 002 418 T5, der EP 1 212 190 A1, der JP H03 292 202 A, der JP 2001 246910 A und der US 3 568 749 A.

Außerdem wir bei entsprechenden Fahrzeugluftreifen mit einer gewinkelten Reifenkarkasse, die über maximal eine Verstärkungslage verfügen, die Steifigkeit im Bereich der Aufstandsfläche zuweilen als unzureichend empfunden.

Die primäre Aufgabe der vorliegenden Erfindung war es, die vorstehend beschriebenen Nachteile des Standes der Technik zu beheben oder zumindest zu vermindern.

Insoweit war es die Aufgabe der vorliegenden Erfindung, den Zielkonflikt zwischen einem möglichst niedrigen Gewicht des Fahrzeugluftreifens und einer hinreichenden Steifigkeit im Bereich der Aufstandsfläche möglichst gut zu lösen.

Dabei war es eine Aufgabe der vorliegenden Erfindung, einen Fahrzeugluftreifen anzugeben, der trotz eines geringen Gewichts über ausgezeichnete mechanische Eigenschaften verfügt und insbesondere auch für anspruchsvolle Anwendungen, beispielsweise im Hochgeschwindigkeitsbereich, geeignet ist.

Insoweit war es die Aufgabe der vorliegenden Erfindung, in Fahrzeugluftreifen mit einer teilweise gewinkelten Reifenkarkasse die Widerstandsfähigkeit gegen Belastungen, insbesondere gegen den Laufstreifen penetrierende Objekte zu erhöhen, sodass ein Fahrzeugluftreifen mit einer hohen Belastbarkeit auch dann erreicht werden kann, wenn lediglich eine oder gar keine Verstärkungslagen, wie beispielsweise Gürtellagen, eingesetzt werden.

Dabei war es eine Aufgabe der vorliegenden Erfindung, einen Fahrzeugluftreifen anzugeben, der im Bereich der Aufstandsfläche zumindest teilweise über eine erhöhte Steifigkeit verfügt, sodass der Verzicht auf zusätzliche Verstärkungslagen leichter möglich ist.

Es war eine ergänzende Aufgabe der vorliegenden Erfindung, spezifische Materialien zu identifizieren, die für den Einsatz in den anzugebenden Fahrzeugluftreifen besonders geeignet sind.

Es war eine weitere Aufgabe der vorliegenden Erfindung, dass der anzugebende Fahrzeugluftreifen in einfacher Weise und unter Verwendung solcher Gerätschaften herstellbar sein sollten, die in der Reifenindustrie bereits regelmäßig zum Einsatz kommen.

Es war eine zusätzliche Aufgabe der vorliegenden Erfindung, dass die anzugebenden Fahrzeugluftreifen für eine breite Anzahl von Fahrzeugtypen geeignet sein sollten und hinsichtlich der eingesetzten Materialien eine hohe Flexibilität aufweisen sollen.

Die Erfinder haben nunmehr erkannt, dass sich die vorstehend beschriebenen Aufgaben überraschenderweise lösen lassen, wenn beim Einsatz einer Reifenkarkasse, welche über zumindest zwei Karkasslagen verfügt, deren Festigkeitsträger im Bereich unterhalb des Laufstreifens jeweils einen von 90° abweichenden Kordwinkel aufweisen, ein spezifischer Massenanteil für diese Karkasslagen am Fahrzeugluftreifen eingestellt wird, wie es in den Ansprüchen definiert ist.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugluftreifen, umfassend:
a) eine Reifenkarkasse mit einem sich von einer ersten Reifenwulst erstreckenden ersten Seitenbereich, einem sich von einer zweiten Reifenwulst erstreckenden zweiten Seitenbereich und einem dazwischen angeordneten Zentralbereich, umfassend eine erste Karkasslage und eine zweite Karkasslage, die jeweils eine Vielzahl von gummierten Festigkeitsträgern umfassen, die sich jeweils durch den ersten Seitenbereich, den zweiten Seitenbereich und den Zentralbereich der Reifenkarkasse erstrecken, und
b) einen relativ zur Reifenkarkasse radial außenliegenden Laufstreifen,

wobei zwischen der Reifenkarkasse und dem Laufstreifen höchstens eine Verstärkungslage angeordnet ist, die eine Vielzahl von gummierten Verstärkungs-Festigkeitsträgern umfasst,
wobei zumindest ein Teil der gummierten Festigkeitsträger der ersten Karkasslage und der zweiten Karkasslage bezogen auf die Umfangsrichtung des Fahrzeugluftreifens im ersten Seitenbereich und im zweiten Seitenbereich einen Kordwinkel im Bereich von 80° bis 90° und im Zentralbereich einen Kordwinkel im Bereich von 5° bis 75° aufweist, und
wobei der kombinierte Massenanteil der ersten Karkasslage und der zweiten Karkasslage im Fahrzeugluftreifen im Bereich von 6 bis 20 % liegt, bezogen auf die Masse des Fahrzeugluftreifens.

In Übereinstimmung mit dem fachmännischen Verständnis handelt es sich bei den regelmäßig rotationssymmetrischen Fahrzeugluftreifen um Produkte, deren Aufbau zweckmäßigerweise relativ zu der radialen Richtung beschrieben wird, d.h. der von der Mitte des Fahrzeugluftreifens radial nach außen weisenden Richtung, sodass die radiale Richtung senkrecht auf der Rotationsachse des Fahrzeugluftreifens steht.

Die Grundlage für den erfindungsgemäßen Fahrzeugluftreifen bilden die Reifenkarkasse und der Laufstreifen, welche zueinander in üblicher Weise angeordnet sind. Der Fahrzeugluftreifen weist als äußere Schicht, d.h. radial außen liegend, einen Laufstreifen auf, welcher gegebenenfalls mit einem Profil versehen werden kann, so dass ein erfindungsgemäßer Fahrzeugluftreifen bevorzugt ist, wobei der Laufstreifen auf der radial außenliegenden Oberfläche ein Profil aufweist. Der Fahrzeugluftreifen weist in Übereinstimmung mit dem üblichen Aufbau entsprechender Fahrzeugluftreifen auf beiden Seiten umlaufende Reifenwülste auf.

Unterhalb der Reifenkarkasse, d.h. radial innen liegend, kann der Fahrzeugluftreifen in vielen Fällen eine Reifeninnenschicht umfassen. Entsprechende Reifeninnenschichten sind dem Fachmann geläufig und dienen regelmäßig dazu, das Innere des Fahrzeugluftreifens luftdicht zu verschließen. Regelmäßig bevorzugt ist entsprechend ein erfindungsgemäßer Fahrzeugluftreifen, wobei die radial innenliegende Seite der Reifenkarkasse zumindest teilweise von der Reifeninnenschicht bedeckt ist.

Der Fachmann versteht, dass Fahrzeugluftreifen in der überwiegenden Zahl der Fälle zu einem großen Teil symmetrisch und dabei komplementäre Komponenten häufig aus ähnlichen Materialien aufgebaut sind. Entsprechend ist es im Rahmen der vorliegenden Erfindung bei sämtlichen Merkmalen, die für ein erstes und ein zweites Element offenbart werden, beispielsweise für den ersten Seitenbereich und den zweiten Seitenbereich, explizit bevorzugt, wenn das entsprechende Merkmal auf beide Seiten des Fahrzeugluftreifens, d.h. für das erste und das zweite Element, realisiert wird.

Eine weitere relevante Bezugsrichtung, mit der der Fachmann regelmäßig den Aufbau entsprechender Fahrzeugluftreifen beschreibt, ist die Umfangsrichtung des Fahrzeugluftreifens. In Übereinstimmung mit dem fachmännischen Verständnis handelt es sich hierbei an jedem Punkt des Kreisumfanges um die jeweilige Kreistangente, die mit der radialen Richtung, d.h. der Verbindung zwischen dem jeweiligen Punkt und dem Mittelpunkt des Reifens einen rechten Winkel einschließt.

In herkömmlichen Radialreifen verlaufen die gummierten Festigkeitsträger der Karkasslagen im Wesentlichen radial. Dies bedeutet, dass die gummierten Festigkeitsträger über die gesamte Breite der Reifenkarkasse quer zur Umfangsrichtung des Fahrzeugluftreifens mit der Umfangsrichtung einen Winkel von etwa 90° einschließen. Entsprechend liegt in einem herkömmlichen Radialreifen jeder gummierte Festigkeitsträger in der Draufsicht auf den Fahrzeugluftreifen über seine gesamte Länge im Wesentlichen im gleichen Kreisabschnitt. Die entsprechende Größe wird vom Fachmann auch als der sogenannte Kordwinkel der in der Karkasslage vorhandenen Festigkeitsträger bezeichnet. Auch wenn die Definition dieser Kordwinkel in Abhängigkeit von der Umfangsrichtung auf den ersten Blick umständlich erscheinen mag, ist es für den Fachmann in der Praxis zwanglos möglich, den Kordwinkel, d.h. den relativen Winkel des Festigkeitsträgers zur Umfangsrichtung, zu bestimmen.

In dem erfindungsgemäßen Fahrzeugluftreifen wird die Reifenkarkasse nunmehr in zumindest drei theoretische Bereiche unterteilt, nämlich den ersten Seitenbereich, welcher sich von der ersten Reifenwulst in Richtung der Reifenaufstandsfläche erstreckt, den Zentralbereich und den zweiten Seitenbereich, welcher sich von der zweiten Reifenwulst in Richtung der Reifenaufstandsfläche erstreckt. Hierbei kann der Zentralbereich zweckmäßigerweise der Bereich der Reifenkarkasse sein, der im Fahrzeugluftreifen unterhalb des Laufstreifens angeordnet ist, wohingegen der erste und zweite Seitenbereich beispielsweise die Reifenkarkasse im Bereich der Flanken des Fahrzeugluftreifens bilden.

Erfindungsgemäß wird im Fahrzeugluftreifen von der vollständig radialen Konstruktion abgewichen, indem nämlich lediglich in dem ersten und zweiten Seitenbereich eine weitgehend radiale Anordnung der Festigkeitsträger, d.h. mit einem Kordwinkel von 80° bis 90°, eingestellt wird. Innerhalb des Zentralbereichs der Reifenkarkasse wird hingegen ein Kordwinkel im Bereich von 5° bis 75° eingestellt, so dass eine Reifenkarkasse erhalten wird, die als teilweise gewinkelte Reifenkarkasse bezeichnet werden kann. In erfindungsgemäßen Fahrzeugluftreifen ist der Zentralbereich somit der Bereich zwischen den Seitenbereichen, in dem zumindest ein Teil der gummierten Festigkeitsträger beider Karkasslagen einen Kordwinkel im Bereich von 5° bis 75° aufweist.

In eigenen Experimenten haben die Erfinder nunmehr erkannt, dass sich ausgezeichnete Steifigkeiten im Bereich der Aufstandsfläche und damit hervorragende Fahreigenschaften beim Einsatz von zwei teilweise gewinkelten Karkasslagen überraschenderweise dann erreichen lassen, wenn das kombinierte Gewicht der beiden Karkasslagen spezifisch eingestellt wird. Insoweit sind die Erfinder ausgehend von einem Fahrzeugreifen mit zwei Verstärkungslagen, nämlich zwei Gürtellagen, zu der Erkenntnis gelangt, dass beim Weglassen beider Gürtellagen das Gewicht der zwei eingesetzten Karkasslagen so eingestellt werden sollte, dass es dem Gewicht der weggelassenen Gürtellagen entspricht.

Hierbei hat sich gezeigt, dass, sofern noch eine Gürtellage vorgesehen wird, das Gewicht der beiden Karkasslagen idealerweise so eingestellt werden sollte, dass es dem Gewicht der einen weggelassenen Gürtellage entspricht. Hieraus konnten die Erfinder die vorstehenden Massenanteile für die erste Karkasslage und die zweite Karkasslage ableiten, wobei die resultierenden erfindungsgemäßen Fahrzeugluftreifen die vorstehend beschriebenen Aufgaben lösen.

In den meisten Fällen wird die Reifenkarkasse durch das spezifisch eingestellte Gewicht der ersten und zweiten Karkasslage, welches vom Fachmann beispielsweise durch die Wahl der Materialien und/oder der Dicke der Karkasslagen beeinflusst werden kann, schwerer sein als das Gewicht typischer Reifenkarkassen, die über lediglich eine Karkasslage verfügen, da die Reifenkarkasse mit den zwei Karkasslagen an das Gewicht der entfallenen Gürtellagen angepasst wird, welche regelmäßig stählerne Festigkeitsträger umfassen und einen relativ hohen Massenanteil im Fahrzeugluftreifen aufweisen. Hierbei können die individuellen Karkasslagen jedoch auch leichter sein, als die eine Karkasslage einer herkömmlichen Reifenkarkasse. Trotz des relativ erhöhten Gewichts der nunmehr zweilagig ausgeführten Reifenkarkasse bleibt durch den Verzicht auf eine, mehrere oder sämtliche Verstärkungslagen eine vorteilhafte Reduktion des Nettogewichts bestehen, wodurch besonders treibstoffsparende Fahrzeugluftreifen mit guten Rolleigenschaften erhalten werden können.

Ohne an diese Theorie gebunden sein zu wollen gehen die Erfinder davon aus, dass es die Anpassung des Gewichts der Reifenkarkasse an die entfallenen Verstärkungslagen in Kombination mit den zwei teilweise gewinkelten Karkasslagen ermöglicht, die für Radialreifen mit Verstärkungslagen typischerweise erwarteten Eigenschaften, auf die viele Fahrzeuge zumindest teilweise abgestimmt sind, besonders gut zu reproduzieren, so dass auch der Fahrer ein vertrautes Fahrerlebnis hat. Wiederum ohne an diese Theorie gebunden sein zu wollen gehen die Erfinder zudem davon aus, dass die Verlagerung der Masse aus den Gürtellagen in die in radialer Richtung weiter innenliegende Reifenkarkasse, wie es durch den Einsatz einer zweiten Karkasslage und die spezifische Gewichtseinstellung erreicht wird, bei ansonsten vergleichbaren Fahreigenschaften eine besonders effiziente Gewichtsreduktion ermöglicht. Hierbei wird vermutet, dass es beim Einsatz einer teilweise gewinkelten Karkasse vorteilhafterweise möglich ist, durch eine robustere, zweilagige Ausführung der Reifenkarkasse eine erhöhte Stabilität in eben jenen Teilbereichen des Fahrzeugluftreifens zu erreichen, die in entsprechenden Fahrzeugluftreifen mit gewinkelter Karkasse besonders relevant für die Steifigkeit sind.

Den Erfindern ist es ausgehend von dieser Erkenntnis gelungen, für den kombinierten Massenanteil der Karkasslagen sowie darüber hinaus für den Massenanteil der einzelnen Karkasslagen besonders vorteilhafte Bereiche zu identifizieren, mit denen sich zuverlässig ausgezeichnete Steifigkeiten im Bereich der Reifenaufstandsfläche sowie eine hohe Robustheit gegen eine ungewollte Penetration der Reifenkarkasse erreichen lassen. Hierbei hat es sich als besonders vorteilhaft erwiesen, wenn die beiden Karkasslagen jeweils mit einem ähnlichen Massenanteil ausgebildet werden. Bevorzugt ist nämlich ein erfindungsgemäßer Fahrzeugluftreifen, wobei der kombinierte Massenanteil der ersten Karkasslage und der zweiten Karkasslage im Fahrzeugluftreifen im Bereich von 8 bis 18 %, bevorzugt im Bereich von 10 bis 16 % liegt, bezogen auf die Masse des Fahrzeugluftreifens. Bevorzugt ist zusätzlich oder alternativ ein erfindungsgemäßer Fahrzeugluftreifen, wobei der Massenanteil der ersten Karkasslage im Fahrzeugluftreifen im Bereich von 3 bis 10 %, bevorzugt im Bereich von 4,5 bis 9 %, besonders bevorzugt im Bereich von 6 bis 8,5 % liegt, bezogen auf die Masse des Fahrzeugluftreifens, und/oder wobei der Massenanteil der zweiten Karkasslage im Fahrzeugluftreifen im Bereich von 3 bis 10 %, bevorzugt im Bereich von 4,5 bis 9 %, besonders bevorzugt im Bereich von 6 bis 8,5 % liegt, bezogen auf die Masse des Fahrzeugluftreifens.

Im Zuge der Entwicklung der Erfindung hat sich gezeigt, dass es besonders zielführend ist, dass Gewicht der Karkasslagen daraufhin abzustimmen, ob eine Verstärkungslage vorgesehen ist oder nicht. Bei Vorliegen einer Verstärkungslage ist es zur Optimierung des Gewichts nämlich besonders vorteilhaft, dass kombinierte Gewicht der beiden Karkasslagen zu reduzieren. Bevorzugt ist daher ein erfindungsgemäßer Fahrzeugluftreifen, wobei der kombinierte Massenanteil der ersten Karkasslage und der zweiten Karkasslage im Fahrzeugluftreifen im Bereich von 13 bis 20 %, bevorzugt im Bereich von 15 bis 20 % liegt, bezogen auf die Masse des Fahrzeugluftreifens, wenn der Fahrzeugluftreifen keine Verstärkungslage umfasst, oder wobei der kombinierte Massenanteil der ersten Karkasslage und der zweiten Karkasslage im Fahrzeugluftreifen im Bereich von 6 bis 13 %, bevorzugt im Bereich von 6 bis 12 % liegt, bezogen auf die Masse des Fahrzeugluftreifens, wenn der Fahrzeugluftreifen eine Verstärkungslage umfasst. Bevorzugt ist zusätzlich oder alternativ ein erfindungsgemäßer Fahrzeugluftreifen, wobei der kombinierte Massenanteil der ersten Karkasslage, der zweiten Karkasslage und der Verstärkungslage im Fahrzeugluftreifen im Bereich von 6 bis 20 % liegt, bezogen auf die Masse des Fahrzeugluftreifens.

Der Fachmann versteht, dass in erfindungsgemäßen Fahrzeugluftreifen prinzipiell auch weitere Karkasslagen vorliegen können. Diese sind jedoch nicht notwendig und führen mit Blick auf das Gesamtgewicht der Reifenkarkasse zu einer zumindest geringfügigen Erhöhung des Massenanteils der Reifenkarkasse und können entsprechend die mit der vorliegenden Erfindung gefundene vorteilhafte Lösung des Zielkonflikts zwischen Reifengewicht und Fahreigenschaften möglicherweise nachteilig beeinflussen. Explizit bevorzugt ist entsprechend ein erfindungsgemäßer Fahrzeugluftreifen, wobei die Reifenkarkasse genau zwei Karkasslagen umfasst, bzw. wobei die Reifenkarkasse aus der ersten Karkasslage und der zweiten Karkasslage besteht.

Auch wenn es theoretisch denkbar ist, dass nur ein Teil der Festigkeitsträger in den beiden Karkasslagen die vorstehend definierten Kordwinkel aufweist, ist es für den Fachmann selbstverständlich, dass es bevorzugt ist, wenn sämtliche Festigkeitsträger die entsprechenden Kordwinkel aufweisen. Dies gilt insbesondere, weil die Festigkeitsträger in typischen Verbundmaterialien, welche für die Fertigung von Karkasslagen eingesetzt werden, ohnehin zumeist im Wesentlichen parallel verlaufen, sodass entsprechende Ausführungsformen besonders leicht und in effizienter Weise durch die Verwendung von in der Reifenfertigung üblichen Materialien hergestellt werden können. Bevorzugt ist somit ein erfindungsgemäßer Fahrzeugluftreifen, wobei sämtliche der gummierten Festigkeitsträger der ersten Karkasslage und der zweiten Karkasslage bezogen auf die Umfangsrichtung des Fahrzeugluftreifens im ersten Seitenbereich und im zweiten Seitenbereich einen Kordwinkel im Bereich von 80° bis 90° und im Zentralbereich einen Kordwinkel im Bereich von 5° bis 75° aufweist. Bevorzugt ist entsprechend auch ein erfindungsgemäßer Fahrzeugluftreifen, wobei mehr als 90 %, bevorzugt mehr als 95 %, besonders bevorzugt mehr als 98 %, ganz besonders bevorzugt sämtliche, der Festigkeitsträger der ersten Karkasslage, im Zentralbereich einen Kordwinkel aufweisen, der sich um weniger als 10°, bevorzugt um weniger als 5°, besonders bevorzugt weniger als 2°, ganz besonders bevorzugt weniger als 1°, vom mittleren Kordwinkel der Festigkeitsträger der ersten Karkasslage im Zentralbereich unterscheidet, und/oder wobei mehr als 90 %, bevorzugt mehr als 95 %, besonders bevorzugt mehr als 98 %, ganz besonders bevorzugt sämtliche, der Festigkeitsträger der zweiten Karkasslage, im Zentralbereich einen Kordwinkel aufweisen, der sich um weniger als 10°, bevorzugt um weniger als 5°, besonders bevorzugt weniger als 2°, ganz besonders bevorzugt weniger als 1°, vom mittleren Kordwinkel der Festigkeitsträger der zweiten Karkasslage im Zentralbereich unterscheidet. Bevorzugt ist insoweit ebenfalls ein erfindungsgemäßer Fahrzeugluftreifen, wobei die erste Karkasslage und/oder die zweite Karkasslage jeweils genau eine Lage an Festigkeitsträgern umfasst, wobei die Festigkeitsträger in jeder Karkasslage bevorzugt im Wesentlichen parallel zueinander angeordnet sind.

Den Erfindern ist es gelungen, für den Verlauf der Festigkeitsträger der beiden Karkasslagen sowohl in den Seitenbereichen als auch im Zentralbereich geeignete Kordwinkel zu identifizieren, mit denen besonders leistungsstarke Fahrzeugluftreifen erhalten werden können. Bevorzugt ist nämlich ein erfindungsgemäßer Fahrzeugluftreifen, wobei zumindest ein Teil, bevorzugt sämtliche, der gummierten Festigkeitsträger der ersten Karkasslage und der zweiten Karkasslage bezogen auf die Umfangsrichtung des Fahrzeugluftreifens im ersten Seitenbereich und im zweiten Seitenbereich einen Kordwinkel im Bereich von 85° bis 90°, besonders bevorzugt im Bereich von 88° bis 90°, aufweist, und/oder wobei zumindest ein Teil, bevorzugt sämtliche, der gummierten Festigkeitsträger der ersten Karkasslage und der zweiten Karkasslage bezogen auf die Umfangsrichtung des Fahrzeugluftreifens im Zentralbereich einen Kordwinkel im Bereich von 15° bis 55°, besonders bevorzugt im Bereich von 20° bis 35°, aufweist.

Die Erfinder haben erkannt, dass es der erfindungsgemäße Einsatz von zumindest zwei Karkasslagen es in vorteilhafter Weise ermöglicht, den Kordwinkel der Festigkeitsträger im Zentralbereich zwischen den Karkasslagen zu invertieren, d. h. die Festigkeitsträger der zwei Karkasslagen so anzuordnen, dass diese im Zentralbereich eine unterschiedliche Steigung aufweisen, die sich im Vorzeichen unterscheidet. Dies resultiert darin, dass die Festigkeitsträger zwischen den beiden Karkasslagen in der Draufsicht einen Winkel einschließen, der in Umfangsrichtung zeigt und dem Summenwinkel der beiden Kordwinkel entspricht. Hierdurch wird in vorteilhafterweise in der Draufsicht auf die Karkasslagen eine gitterförmige Überlagerung der Festigkeitsträger erreicht, welche einen besonders effizienten Schutz gegen die ungewollte Penetration der Karkasslage durch Fremdobjekte liefert und zudem eine besonders hohe Steifigkeit bedingt. Bevorzugt ist entsprechend ein erfindungsgemäßer Fahrzeugluftreifen, wobei die Festigkeitsträger der ersten Karkasslage im Zentralbereich mit den Festigkeitsträgern der zweiten Karkasslage einen in Umfangsrichtung weisenden Winkel einschließen, der die Summe der jeweiligen Kordwinkel ist, und/oder wobei die Festigkeitsträger der ersten Karkasslage im Zentralbereich relativ zu den Festigkeitsträgern der zweiten Karkasslage ein anderes Vorzeichen der Steigung aufweisen.

Ausgehend von der vorstehenden beschriebenen Ausführungsform ist es besonders vorteilhaft, wenn die Kordwinkel der Festigkeitsträger abgesehen vom Vorzeichen möglichst gleichartig ausgeführt werden. Hierbei ist insbesondere der Einsatz von identischen Kordwinkeln bevorzugt. Dies ermöglicht es nämlich in vorteilhafter Weise, zur Herstellung der Reifenkarkasse die gleichen Verbundmaterialien zu verwenden, wobei die zweite Karkasslage lediglich umgekehrt aufgelegt werden muss. Hierdurch weisen die Festigkeitsträger in den beiden Karkasslagen die gleichen Kordwinkel auf, wobei der Kordwinkel der einen Festigkeitsträger links und der andere rechts von der Umfangsrichtung liegt, so dass sich ein in Richtung der Umfangsrichtung weisender Winkel ergibt, der dem doppelten Kordwinkel der Festigkeitsträger in der ersten bzw. der zweiten Karkasslage entspricht. Bevorzugt ist ein erfindungsgemäßer Fahrzeugluftreifen, wobei sich der mittlere Kordwinkel der Festigkeitsträger der ersten Karkasslage im Zentralbereich um weniger als 15°, bevorzugt weniger als 10°, besonders bevorzugt weniger als 5°, ganz besonders bevorzugt weniger als 2°, vom mittleren Kordwinkel der Festigkeitsträger der zweiten Karkasslage unterscheidet, wobei die mittleren Kordwinkel im Zentralbereich insbesondere bevorzugt identisch sind.

Da ein Großteil der notwendigen Steifigkeit in erfindungsgemäßen Fahrzeugluftreifen durch den nicht linearen Verlauf der Festigkeitsträger im Zentralbereich erreicht wird, ist es für die weit überwiegende Zahl der Fälle zweckmäßig, dass der Zentralbereich, der Bereich der gewinkelt verlaufenden Festigkeitsträger, im Bereich des Laufstreifens bzw. der Aufstandsfläche platziert wird und in seinen Dimensionen möglichst weitgehend an die Abmessung des Laufstreifens angepasst wird. Bevorzugt ist entsprechend ein erfindungsgemäßer Fahrzeugluftreifen, wobei der Laufstreifen in radial nach außen weisender Richtung zumindest teilweise, bevorzugt vollständig, oberhalb des Zentralbereichs angeordnet ist. Bevorzugt ist zusätzlich oder alternativ ein erfindungsgemäßer Fahrzeugluftreifen, wobei der Quotient aus der Breite des Laufstreifens geteilt durch die Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt, und/oder wobei der Quotient aus der Breite der Aufstandsfläche geteilt durch die Breite des Zentralbereichs, jeweils quer zur Umfangsrichtung des Fahrzeugluftreifens, im Bereich von 0,7 bis 2, bevorzugt im Bereich von 0,8 bis 1,6, besonders bevorzugt im Bereich von 0,9 bis 1,2, ganz besonders bevorzugt im Bereich von 0,95 bis 1,05, liegt.

Grundsätzlich kann es als Vorteil der erfindungsgemäßen Fahrzeugluftreifen angesehen werden, dass diese hinsichtlich der einzusetzenden Materialien relativ flexibel sind und bei der Herstellung weitgehend auf solche Materialien zurückgegriffen werden kann, welche im Bereich der Reifenfertigung bereits regelmäßig zum Einsatz kommen. Diese Materialauswahl erfolgt jedoch mit der Maßgabe, dass es unter Einsatz der entsprechenden Materialien möglich sein muss, die vorstehend definierten Massenanteile zu realisieren. Insoweit besteht ein zusätzlicher Beitrag der vorliegenden Erfindung auch darin, dass die Erfinder Materialien identifizieren konnten, mit denen sich die vorstehend beschriebenen Reifenkarkassen besonders effizient umsetzen lassen, wobei insbesondere die Verwendung von stählernen Festigkeitsträgern in der ersten und/oder zweiten Karkasslage sowie der Einsatz von Aramid, Polyethylenterephthalat und Rayon besonders bevorzugt ist. Bevorzugt ist ein erfindungsgemäßer Fahrzeugluftreifen, wobei die Festigkeitsträger der ersten Karkasslage und/oder der zweiten Karkasslage textile Festigkeitsträger oder metallische Festigkeitsträger, insbesondere stählerne Festigkeitsträger, bevorzugt textile Festigkeitsträger mit zumindest einem Garn sind, wobei das Garn besonders bevorzugt aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), ganz besonders bevorzugt ausgewählt ist aus der Gruppe bestehend aus Aramid, Polyethylenterephthalat und Rayon.

Ganz besonders bevorzugt ist im Rahmen der vorliegenden Erfindung zudem, dass eine der Karkasslagen im Wesentlichen ausschließlich metallische Festigkeitsträger umfasst, wohingegen die anderen Karkasslage im Wesentlichen vollständig textile Festigkeitsträger umfasst. Alternativ bevorzugt ist eine Ausgestaltung, in der jeder der beiden Karkasslagen sowohl textile Festigkeitsträger, insbesondere aus Aramid, Polyethylenterephthalat und Rayon als auch metallische Festigkeitsträger, insbesondere Festigkeitsträger aus Stahl, umfasst. Bevorzugt ist ebenfalls ein erfindungsgemäßer Fahrzeugluftreifen, wobei, wobei die gummierten Festigkeitsträger in der ersten Karkasslage und/oder zweiten Karkasslage von einem Gummierungswerkstoff umgeben sind, wobei der Gummierungswerkstoff bevorzugt herstellbar ist durch Vulkanisation einer vulkanisierbaren Kautschukmischung, wobei die vulkanisierbare Kautschukmischung besonders bevorzugt zumindest einen Dienkautschuk und zumindest einen Füllstoff umfasst.

Im Rahmen der vorliegenden Erfindung kommt auch der Dimensionierung der Festigkeitsträger eine höhere Bedeutung zu als üblich. Insoweit schlagen die Erfinder der vorliegenden Erfindung vor, dass zum Erreichen besonders leistungsfähiger erfindungsgemäßer Fahrzeugluftreifen die Festigkeitsträger in einer und vorzugsweise in beiden Karkasslagen mit einem spezifischen Durchmesser ausgebildet werden sollen. Bevorzugt ist nämlich ein erfindungsgemäßer Fahrzeugluftreifen, wobei die Festigkeitsträger der ersten Karkasslage und/oder der zweiten Karkasslage einen mittleren Durchmesser im Bereich von 0,1 bis 2,0 mm, bevorzugt im Bereich von 0,2 bis 1,6 mm, aufweisen.

Nach Einschätzung der Erfinder ist es grundsätzlich vorteilhaft, für eine der Karkasslagen oder sogar für beide Karkasslagen einen Lagenumschlag vorzusehen, indem die entsprechende Karkasslage um ein Wulstelement herumgeschlagen wird. Bei den regelmäßig gleichmäßig dicken Verbundmaterialien, welche als Karkasslagen eingesetzt werden, führt dies insbesondere bei Einsatz von Lagenumschlägen für beide Karkasslagen zumeist zu einer Gewichtsverteilung, bei der der Gewichtsschwerpunkt der Reifenkarkasse im unteren Bereich, d.h. in der Nähe der Wulstbereiche liegt. Dies kann insbesondere in Ausgestaltungen, in denen noch eine Verstärkungslage eingesetzt wird, welche zusätzlichen Widerstand gegen eine ungewollte Penetration sowie zusätzliches Gewicht im Bereich der Reifenaufstandsfläche bereitstellt, günstig sein. Bevorzugt ist zum einen ein erfindungsgemäßer Fahrzeugluftreifen, wobei die erste Karkasslage einen ersten Lagenumschlag um ein erstes Wulstelement und einen zweiten Lagenumschlag um ein zweites Wulstelement aufweist,
wobei das Ende des ersten Lagenumschlags und das Ende des zweiten Lagenumschlags so angeordnet sind, dass sie in der orthogonal zur Umfangsrichtung stehenden Ebene von der Unterkante der jeweiligen Reifenwulst jeweils einen Abstand von weniger als 0,7*h, bevorzugt weniger als 0,6*h, besonders bevorzugt weniger als 0,5*h, ganz besonders bevorzugt weniger als 0,4*h, aufweisen, wobei h die Höhe des Fahrzeugluftreifens ist, gemessen von der Unterkante der jeweiligen Reifenwulst bis zur Oberseite des Laufstreifens. Bevorzugt ist zusätzlich oder alternativ ein erfindungsgemäßer Fahrzeugluftreifen, wobei die zweite Karkasslage einen dritten Lagenumschlag um das erste Wulstelement und einen vierten Lagenumschlag um das zweite Wulstelement aufweist, wobei das Ende des dritten Lagenumschlags und das Ende des vierten Lagenumschlags so angeordnet sind, dass sie in der orthogonal zur Umfangsrichtung stehenden Ebene von der Unterkante der jeweiligen Reifenwulst jeweils einen Abstand von weniger als 0,7*h, bevorzugt weniger als 0,6*h, besonders bevorzugt weniger als 0,5*h, ganz besonders bevorzugt weniger als 0,4*h, aufweisen, wobei h die Höhe des Fahrzeugluftreifens ist, gemessen von der Unterkante der jeweiligen Reifenwulst bis zur Oberseite des Laufstreifens.

Insbesondere in Fahrzeugluftreifen, die über keine Verstärkungslage verfügen, ist es nach Einschätzung der Erfinder jedoch vorteilhaft, die zweite Karkasslage nicht mit Lagenumschlägen um die Wulstelemente auszuführen, sondern diese im Wulstbereich, beispielsweise auf Höhe der Wulstelemente, enden zu lassen. Hierdurch ergibt sich eine Gewichtsverteilung in der Reifenkarkasse, die im Vergleich zu dem doppelten Lagenumschlag weiter in Richtung des Bereichs der Reifenaufstandsfläche verschoben ist, wodurch im Bereich der Reifenaufstandsfläche effizienter höhere Steifigkeiten und eine bessere Widerstandsfähigkeit gegen ungewollte Penetration durch Fremdobjekte erreicht werden können. Eine derart ausgeführte Karkasslage wird vorteilhafterweise als äußere Karkasslage vorgesehen, d. h. als Karkasslage, die relativ zur ersten Karkasslage weiter außen liegt. Bevorzugt ist entsprechend ein erfindungsgemäßer Fahrzeugluftreifen, wobei die zweite Karkasslage zwischen der ersten Reifenwulst und der zweiten Reifenwulst verläuft, und/oder wobei die zweite Karkasslage auf beiden Seiten des Fahrzeugluftreifens auf Höhe von in den Reifenwülsten angeordneten Wulstkernen endet. Bevorzugt ist zusätzlich oder alternativ ein erfindungsgemäßer Fahrzeugluftreifen, wobei die zweite Karkasslage relativ zur ersten Karkasslage in radialer Richtung zumindest abschnittweise, bevorzugt vollständig, innen oder außen, bevorzugt außen, liegt.

Aus den vorstehenden Ausführungen ist für den Fachmann klar ersichtlich, dass solche Fahrzeugluftreifen explizit bevorzugt sind, die über keine Verstärkungslage verfügen. In diesen ergibt sich ein besonders großes Potential für die Gewichtsreduktion, wobei die Widerstandsfähigkeit gegen Penetration sowie die Steifigkeit im Bereich der Reifenaufstandsfläche durch die erfindungsgemäße Ausgestaltung in vorteilhafter Weise nicht oder nur im geringen Ausmaß nachteilig beeinflusst werden. Bevorzugt ist somit ein erfindungsgemäßer Fahrzeugluftreifen, wobei der Laufstreifen unmittelbar auf der radial außenliegenden Seite der Reifenkarkasse angeordnet ist, und/oder wobei im Fahrzeugluftreifen zwischen dem Laufstreifen und der Reifenkarkasse keine Verstärkungslagen angeordnet sind, wobei der Fahrzeugluftreifen bevorzugt an keiner Stelle Verstärkungslagen umfasst, die eine Vielzahl von gummierten Verstärkungs-Festigkeitsträgern umfasst.

Als Alternative zu der vorstehenden Ausführungsform sind solche Fahrzeugluftreifen bevorzugt, in denen genau eine Verstärkungslage vorgesehen ist, wobei insbesondere mit Gürtellagen und Bandagen die Fahreigenschaften von erfindungsgemäßen Fahrzeugluftreifen gezielt an die Anforderungen für spezifische Einsatzzwecke angepasst werden können. Bevorzugt ist somit ein erfindungsgemäßer Fahrzeugluftreifen, wobei zwischen der Reifenkarkasse und dem Laufstreifen genau eine Verstärkungslage angeordnet ist, die eine Vielzahl von gummierten Verstärkungs-Festigkeitsträgern umfasst, wobei die Verstärkungslage ausgewählt ist aus der Gruppe bestehend aus Gürtellagen und Bandagen, bevorzugt Gürtellagen. Bevorzugt ist insoweit ein erfindungsgemäßer Fahrzeugluftreifen, wobei die Verstärkungslage eine Gürtellage ist, wobei die gummierten Verstärkungs-Festigkeitsträger bevorzugt bezogen auf die Umfangsrichtung des Fahrzeugluftreifens einen Kordwinkel im Bereich von 10° bis 70°, weiter bevorzugt im Bereich von 15° bis 55°, noch weiter bevorzugt im Bereich von 20° bis 35°, aufweisen. Bevorzugt ist insoweit auch ein erfindungsgemäßer Fahrzeugluftreifen, wobei die Verstärkungslage eine Cap-Ply Lage ist, wobei die gummierten Verstärkungs-Festigkeitsträger bevorzugt bezogen auf die Umfangsrichtung des Fahrzeugluftreifens einen Kordwinkel im Bereich von 0° bis 5° aufweisen.

Grundsätzlich bevorzugt ist ein erfindungsgemäßer Fahrzeugluftreifen, wobei der Fahrzeugluftreifen ein PKW-Reifen ist. Prinzipiell bevorzugt ist auch ein erfindungsgemäßer Fahrzeugluftreifen, wobei die erste Reifenwulst und/oder die zweite Reifenwulst, bevorzugt beide Reifenwülste ein Wulstelement, besonders bevorzugt einen Wulstkern, ganz bevorzugt einen Wulstkern mit einer daran angeordneten Kernfahne, aufweisen. Bevorzugt ist ein erfindungsgemäßer Fahrzeugluftreifen, wobei außen auf dem ersten Seitenbereich und/oder auf dem zweiten Seitenbereich der Reifenkarkasse Seitenwände aus einem Gummiwerkstoff angeordnet sind. Für die überwiegende Zahl der Fälle bevorzugt ist auch ein erfindungsgemäßer Fahrzeugluftreifen, wobei der Laufstreifen auf der radial außenliegenden Oberfläche ein Profil aufweist.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines erfindungsgemäßen Fahrzeugluftreifens in einer ersten bevorzugten Ausführungsform;
- Fig. 2: eine schematische Querschnittsdarstellung eines erfindungsgemäßen Fahrzeugluftreifens in einer zweiten bevorzugten Ausführungsform; und
- Fig. 3: eine schematische Erläuterung des Verlaufs der gummierten Festigkeitsträger in den verschiedenen Bereichen der Reifenkarkasse.

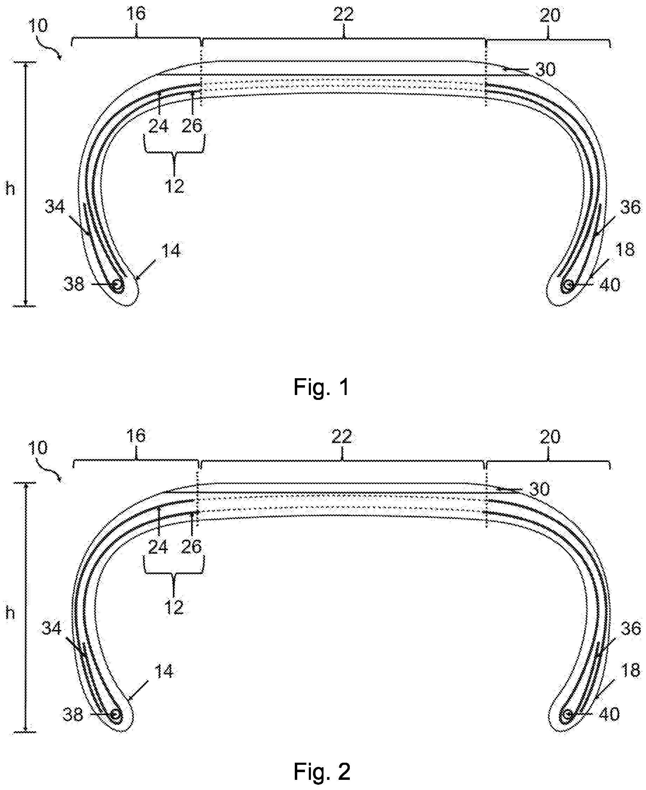

Die Fig. 1 zeigt eine schematische Querschnittdarstellungen durch einen erfindungsgemäßen Fahrzeugluftreifen 10 in der orthogonal zur Umfangsrichtung stehenden Ebene durch den Fahrzeugluftreifen 10. Zu erkennen ist dabei eine Reifenkarkasse 12, welche aus einer ersten Karkasslage 24 und einer zweiten Karkasslage 26 besteht. Die Reifenkarkasse 12 ist in drei virtuelle Bereiche unterteilt, nämlich den ersten Seitenbereich 16, der sich von der ersten Reifenwulst 14 erstreckt und in den Zentralbereich 22 übergeht, sowie den vom Zentralbereich 22 bis zur zweiten Reifenwulst 18 reichenden zweiten Seitenbereich 20. Radial außen zur Reifenkarkasse 12 ist ein Laufstreifen 30 angeordnet.

Die erste Karkasslage 24 weist einen ersten Lagenumschlag 34 und einen zweiten Lagenumschlag 36 auf, die um ein erstes Wulstelement 38 bzw. ein zweites Wulstelement 40 herumgeschlagen sind, und deren Enden in radialer Richtung bei etwa 30 % der Höhe des Fahrzeugreifens 10 in den Reifenflanken enden. Diese Höhe des Fahrzeugreifens 10 ist die Höhe von der Unterseite der jeweiligen Reifenwulst bis zur Oberseite des Laufstreifens 30 und wird in den Fig. 1 durch den eingetragenen Doppelpfeil kenntlich gemacht.

In dem gezeigten Fahrzeugluftreifen 10 weisen die Festigkeitsträger 28a - 28d der ersten Karkasslage 24 und der zweiten Karkasslage 26 lediglich im ersten Seitenbereich 16 und im zweiten Seitenbereich 20 einen Kordwinkel von etwa 90° auf. Im Zentralbereich 22 der Reifenkarkasse 12 weisen die gummierten Festigkeitsträger 28a - 28d beider Karkasslagen bezogen auf die Umfangsrichtung des Fahrzeugluftreifens 10 hingegen einen Kordwinkel von etwa 33° auf.

Der jeweilige Kordwinkel der Festigkeitsträger 28a - 28d liegt in den verschiedenen Karkasslagen dabei zum einen links und zum anderen rechts der Umfangsrichtung, da in Überstimmung mit dem fachmännischen Verständnis als Kordwinkel immer der kleinere Winkel angegeben wird. Dies bedeutet, dass bei einem an sich identischen Kordwinkel der Festigkeitsträger 28a - 28d in der ersten Karkasslage 24 und der zweiten Karkasslage 26, diese entlang der Umfangsrichtung (aber auch quer zur Umfangsrichtung) eine Steigung mit umgekehrtem Vorzeichen aufweisen und entsprechend einen in Umfangsrichtung weisenden Winkel einschließen, welcher etwa 66° entspricht.

Im gezeigten Beispiel der Fig. 1 entspricht die Breite des Zentralbereichs 22 in etwa der Breite des Laufstreifens 30 bzw. der Aufstandsfläche.

In dem gezeigten Beispiel der Fig. 1 sind die Festigkeitsträger 28a - 28d der beiden Karkasslagen jeweils von einem Gummierungswerkstoff umgeben, welcher durch Vulkanisation einer vulkanisierbaren Kautschukmischung erhalten wurde, welche unter anderem einen typischen Dienkautschuk, beispielsweise Styrol-Butadien-Kautschuk und einen Füllstoff, beispielsweise Ruß, umfasst. Die in den Gummierungswerkstoffen eingebetteten Festigkeitsträger 28a - 28d der ersten Karkasslage 24 sind im gezeigten Beispiel sämtliche als textile Festigkeitsträger mit Garnen aus Polyethylenterephthalat ausgebildet und weisen einen Durchmesser von etwa 0,5 mm auf. Die in den Gummierungswerkstoffen eingebetteten Festigkeitsträger 28a - 28d der zweiten Karkasslage 26 sind im gezeigten Beispiel sämtliche als stählerne Festigkeitsträger mit einem Durchmesser von etwa 0,7 mm ausgebildet. Die Festigkeitsträger 28a - 28d sind dabei in den Karkasslagen jeweils im Wesentlichen parallel zueinander angeordnet. Entsprechend weisen die Festigkeitsträger 28a - 28d der beiden Karkasslagen im Zentralbereich jeweils im Wesentlichen keine Abweichungen von dem mittleren Kordwinkel der Festigkeitsträger 28a - 28d der jeweiligen Lage auf.

In dem gezeigten Fahrzeugluftreifen 10 liegt der Laufstreifen 30 unmittelbar auf der radial außenliegenden Seite der Reifenkarkasse 12, sodass keine weiteren Lagen insbesondere keine Verstärkungslagen 32, d.h. keine Lagen, die eine Vielzahl von gummierten Verstärkungs-Festigkeitsträgern umfassen, vorgesehen sind, was mit Blick auf das Gewicht des Fahrzeugluftreifens 10 besonders bevorzugt ist.

In der Fig. 1 ist die erste Karkasslage 24 oberhalb, d. h. in radialer Richtung außen, zur zweiten Karkasslage 26 angeordnet.

In dem Beispiel der Fig. 1 weisen die erste Karkasslage 24 und die zweite Karkasslage 26 einen kombinierten Massenanteil von etwa 17 % auf, bezogen auf die Masse des Fahrzeugluftreifens 10, wobei hierbei etwa 10 % auf die zweite Karkasslage 26 und etwa 7 % auf die erste Karkasslage 24 entfallen.

Im Gegensatz hierzu zeigt Fig. 2 einen erfindungsgemäßen Fahrzeugluftreifen, bei dem ausgehend von dem grundsätzlichen Aufbau der Fig. 1 eine Verstärkungslage 32 zwischen dem Laufstreifen 30 und der Reifenkarkasse 12 vorgesehen ist. In dem Beispiel der Fig. 2 umfasst auch die zweite Karkasslage 26 ausschließlich textile Festigkeitsträger 28a - 28d, die beispielsweise aus Aramid ausgebildet sind, wobei auch die Dicke der Karkasslagen angepasst wird. Hierdurch weisen die erste Karkasslage 24 und die zweite Karkasslage 26 einen kombinierten Massenanteil von etwa 10 % auf, bezogen auf die Masse des Fahrzeugluftreifens 10, wobei hierbei etwa 4 % auf die zweite Karkasslage 26 und etwa 6 % auf die erste Karkasslage 24 entfallen

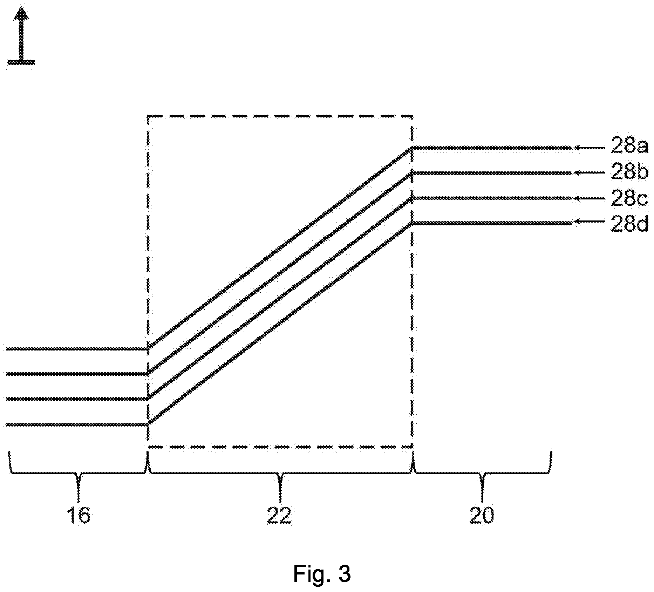

Fig. 3 zeigt abschließend eine schematische Erläuterung des Verlaufs der gummierten Festigkeitsträger 28a - 28d in einer Reifenkarkasse 12 für eine beispielhafte Karkasslage, wie sie bei der Fertigung von Fahrzeugluftreifen 10 beispielsweise vor dem Bombieren der Reifenkarkasse 12 und der Applikation des Laufstreifens 30 auf der Reifenaufbautrommel vorliegen kann. Die Lage des Zentralbereichs 22 ist durch die gestichelten Hilfslinien angedeutet. Die Umfangsrichtung des späteren Fahrzeugluftreifens 10 wird durch den Richtungspfeil angedeutet. Es ist klar zu erkennen, dass die Festigkeitsträger 28a - 28d im ersten Seitenbereich 16 und im zweiten Seitenbereich 20 mit der Umfangsrichtung einen Winkel von 90° einschließen, d.h. orthogonal zu dieser verlaufen. Im Gegensatz hierzu verlaufen die Festigkeitsträger 28a - 28d im Zentralbereich 22 zwar weiterhin parallel zueinander, jedoch relativ zur Umfangsrichtung mit einem kleineren Winkel von etwa 52°, der in Übereinstimmung mit dem fachmännischen Verständnis als der kleinere der zwei Schnittwinkle mit der Umfangrichtung bestimmt wird.

### Bezugszeichenliste

- 10: Fahrzeugluftreifen
- 12: Reifenkarkasse
- 14: Erster Reifenwulst
- 16: Erster Seitenbereich
- 18: Zweiter Reifenwulst
- 20: Zweiter Seitenbereich
- 22: Zentralbereich
- 24: Erste Karkasslage
- 26: Zweite Karkasslage
- 28a-d: Festigkeitsträger
- 30: Laufstreifen
- 32: Verstärkungslage
- 34: Erster Lagenumschlag
- 36: Zweiter Lagenumschlag
- 38: Erstes Wulstelement
- 40: Zweites Wulstelement

## Patentansprüche

1. Fahrzeugluftreifen (10), umfassend:
a) eine Reifenkarkasse (12) mit einem sich von einer ersten Reifenwulst (14) erstreckenden ersten Seitenbereich (16), einem sich von einer zweiten Reifenwulst (18) erstreckenden zweiten Seitenbereich (20) und einem dazwischen angeordneten Zentralbereich (22), umfassend eine erste Karkasslage (24) und eine zweite Karkasslage (26), die jeweils eine Vielzahl von gummierten Festigkeitsträgern (28a-d) umfassen, die sich jeweils durch den ersten Seitenbereich (16), den zweiten Seitenbereich (20) und den Zentralbereich (22) der Reifenkarkasse (12) erstrecken, und
b) einen relativ zur Reifenkarkasse (12) radial außenliegenden Laufstreifen (30),
wobei zwischen der Reifenkarkasse (12) und dem Laufstreifen (30) höchstens eine Verstärkungslage (32) angeordnet ist, die eine Vielzahl von gummierten Verstärkungs-Festigkeitsträgern umfasst,
wobei zumindest ein Teil der gummierten Festigkeitsträger (28a-d) der ersten Karkasslage (24) und der zweiten Karkasslage (26) bezogen auf die Umfangsrichtung des Fahrzeugluftreifens (10) im ersten Seitenbereich (16) und im zweiten Seitenbereich (20) einen Kordwinkel im Bereich von 80° bis 90° und im Zentralbereich (22) einen Kordwinkel im Bereich von 5° bis 75° aufweist, **dadurch gekennzeichnet, dass**
der kombinierte Massenanteil der ersten Karkasslage (24) und der zweiten Karkasslage (26) im Fahrzeugluftreifen (10) im Bereich von 6 bis 20 % liegt, bezogen auf die Masse des Fahrzeugluftreifens (10).

2. Fahrzeugluftreifen (10) nach Anspruch 1, wobei der kombinierte Massenanteil der ersten Karkasslage (24) und der zweiten Karkasslage (26) im Fahrzeugluftreifen (10) im Bereich von 8 bis 18 %, bevorzugt im Bereich von 10 bis 16 % liegt, bezogen auf die Masse des Fahrzeugluftreifens (10).

3. Fahrzeugluftreifen (10) nach einem der Ansprüche 1 oder 2, wobei der kombinierte Massenanteil der ersten Karkasslage (24) und der zweiten Karkasslage (26) im Fahrzeugluftreifen (10) im Bereich von 13 bis 20 %, bevorzugt im Bereich von 15 bis 20 % liegt, bezogen auf die Masse des Fahrzeugluftreifens (10), wenn der Fahrzeugluftreifen (10) keine Verstärkungslage (32) umfasst,
oder
wobei der kombinierte Massenanteil der ersten Karkasslage (24) und der zweiten Karkasslage (26) im Fahrzeugluftreifen (10) im Bereich von 6 bis 13 %, bevorzugt im Bereich von 6 bis 12 % liegt, bezogen auf die Masse des Fahrzeugluftreifens (10), wenn der Fahrzeugluftreifen (10) eine Verstärkungslage (32) umfasst.

4. Fahrzeugluftreifen (10) nach einem der Ansprüche 1 bis 3, wobei der Massenanteil der ersten Karkasslage (24) im Fahrzeugluftreifen (10) im Bereich von 3 bis 10 %, bevorzugt im Bereich von 4,5 bis 9 %, besonders bevorzugt im Bereich von 6 bis 8,5 % liegt, bezogen auf die Masse des Fahrzeugluftreifens (10),
und/oder
wobei der Massenanteil der zweiten Karkasslage (26) im Fahrzeugluftreifen (10) im Bereich von 3 bis 10 %, bevorzugt im Bereich von 4,5 bis 9 %, besonders bevorzugt im Bereich von 6 bis 8,5 % liegt, bezogen auf die Masse des Fahrzeugluftreifens (10).

5. Fahrzeugluftreifen (10) nach einem der Ansprüche 1 bis 4, wobei zumindest ein Teil, bevorzugt sämtliche, der gummierten Festigkeitsträger (28a-d) der ersten Karkasslage (24) und der zweiten Karkasslage (26) bezogen auf die Umfangsrichtung des Fahrzeugluftreifens (10) im Zentralbereich (22) einen Kordwinkel im Bereich von 15° bis 55°, besonders bevorzugt im Bereich von 20° bis 35°, aufweist.

6. Fahrzeugluftreifen (10) nach einem der Ansprüche 1 bis 5, wobei die gummierten Festigkeitsträger (28a-d) der ersten Karkasslage (24) im Zentralbereich (22) mit den gummierten Festigkeitsträgern (28a-d) der zweiten Karkasslage (26) einen in Umfangsrichtung weisenden Winkel einschließen, der die Summe der jeweiligen Kordwinkel ist.

7. Fahrzeugluftreifen (10) nach einem der Ansprüche 1 bis 6, wobei die Festigkeitsträger (28a-d) der ersten Karkasslage (24) und/oder der zweiten Karkasslage (26) textile Festigkeitsträger oder metallische Festigkeitsträger, insbesondere stählerne Festigkeitsträger, bevorzugt textile Festigkeitsträger mit zumindest einem Garn sind, wobei das Garn besonders bevorzugt aus einem Material besteht, welches ausgewählt ist aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), ganz besonders bevorzugt ausgewählt ist aus der Gruppe bestehend aus Aramid, Polyethylenterephthalat und Rayon.

8. Fahrzeugluftreifen (10) nach einem der Ansprüche 1 bis 7, wobei die Festigkeitsträger (28a-d) der ersten Karkasslage (24) und/oder der zweiten Karkasslage (26) einen mittleren Durchmesser im Bereich von 0,1 bis 2,0 mm, bevorzugt im Bereich von 0,2 bis 1,6 mm, aufweisen.

9. Fahrzeugluftreifen (10) nach einem der Ansprüche 1 bis 8, wobei zwischen der Reifenkarkasse (12) und dem Laufstreifen (30) genau eine Verstärkungslage (32) angeordnet ist, die eine Vielzahl von gummierten Verstärkungs-Festigkeitsträgern umfasst, wobei die Verstärkungslage (32) ausgewählt ist aus der Gruppe bestehend aus Gürtellagen und Bandagen, bevorzugt Gürtellagen.

10. Fahrzeugluftreifen (10) nach einem der Ansprüche 1 bis 8, wobei im Fahrzeugluftreifen (10) zwischen dem Laufstreifen (30) und der Reifenkarkasse (12) keine Verstärkungslagen (32) angeordnet sind, wobei der Fahrzeugluftreifen (10) bevorzugt an keiner Stelle Verstärkungslagen (32) umfasst, die eine Vielzahl von gummierten Verstärkungs-Festigkeitsträgern umfasst.

## Claims

1. Pneumatic vehicle tyre (10), comprising:
a) a tyre carcass (12) with a first side region (16) extending from a first tyre bead (14), a second side region (20) extending from a second tyre bead (18), and a central region (22) disposed therebetween, comprising a first carcass ply (24) and a second carcass ply (26) which each comprise a multiplicity of rubberized strength members (28a-d) that extend in each case through the first side region (16), the second side region (20) and the central region (22) of the tyre carcass (12), and
b) a tread (30) which lies radially outside relative to the tyre carcass (12), wherein disposed between the tyre carcass (12) and the tread (30) is at most one reinforcement ply (32) which comprises a multiplicity of rubberized reinforcement strength members,
wherein at least part of the rubberized strength members (28a-d) of the first carcass ply (24) and of the second carcass ply (26) has, in the first side region (16) and in the second side region (20), a cord angle in the range from 80° to 90°, and, in the central region (22), a cord angle in the range from 5° to 75°, in relation to the circumferential direction of the pneumatic vehicle tyre (10), **characterized in that**
the combined mass content of the first carcass ply (24) and of the second carcass ply (26) in the pneumatic vehicle tyre (10) is in the range from 6 to 20% in terms of the mass of the pneumatic vehicle tyre (10).

2. Pneumatic vehicle tyre (10) according to Claim 1, wherein the combined mass content of the first carcass ply (24) and of the second carcass ply (26) in the pneumatic vehicle tyre (10) is in the range from 8 to 18%, preferably in the range from 10 to 16%, in terms of the mass of the pneumatic vehicle tyre (10).

3. Pneumatic vehicle tyre (10) according to one of Claims 1 or 2, wherein the combined mass content of the first carcass ply (24) and of the second carcass ply (26) in the pneumatic vehicle tyre (10) is in the range from 13 to 20%, preferably in the range from 15 to 20%, in terms of the mass of the pneumatic vehicle tyre (10), if the pneumatic vehicle tyre (10) does not comprise a reinforcement ply (32),
or
wherein the combined mass content of the first carcass ply (24) and of the second carcass ply (26) in the pneumatic vehicle tyre (10) is in the range from 6 to 13%, preferably in the range from 6 to 12%, in terms of the mass of the pneumatic vehicle tyre (10), if the pneumatic vehicle tyre (10) does comprise a reinforcement ply (32).

4. Pneumatic vehicle tyre (10) according to one of Claims 1 to 3, wherein the mass content of the first carcass ply (24) in the pneumatic vehicle tyre (10) is in the range from 3 to 10%, preferably in the range from 4.5 to 9%, particularly preferably in the range from 6 to 8.5%, in terms of the mass of the pneumatic vehicle tyre (10),
and/or
wherein the mass content of the second carcass ply (26) in the pneumatic vehicle tyre (10) is in the range from 3 to 10%, preferably in the range from 4.5 to 9%, particularly preferably in the range from 6 to 8.5%, in terms of the mass of the pneumatic vehicle tyre (10).

5. Pneumatic vehicle tyre (10) according to one of Claims 1 to 4, wherein at least part, preferably all, of the rubberized strength members (28a-d) of the first carcass ply (24) and of the second carcass ply (26) have in the central region (22) a cord angle in the range from 15° to 55°, particularly preferably in the range from 20° to 35°, in relation to the circumferential direction of the pneumatic vehicle tyre (10).

6. Pneumatic vehicle tyre (10) according to one of Claims 1 to 5, wherein the rubberized strength members (28a-d) of the first carcass ply (24) in the central region (22), conjointly with the rubberized strength members (28a-d) of the second carcass ply (26), include an angle which faces the circumferential direction and is the sum of the respective cord angles.

7. Pneumatic vehicle tyre (10) according to one of Claims 1 to 6, wherein the strength members (28a-d) of the first carcass ply (24) and/or of the second carcass ply (26) are textile strength members or metallic strength members, in particular steel strength members, preferably textile strength members with at least one yarn, wherein the yarn is particularly preferably composed of a material selected from the group comprising aramid, polyethylene terephthalate, polyether ketone, polyketone, polyethylene naphthalate, rayon, viscose, carbon fibres, natural fibres, glass fibres and **PBO** (poly(p-phenylene-2,6-benzobisoxazole)), most preferably selected from the group comprising aramid, polyethylene terephthalate and rayon.

8. Pneumatic vehicle tyre (10) according to one of Claims 1 to 7, wherein the strength members (28a-d) of the first carcass ply (24) and/or of the second carcass ply (26) have a mean diameter in the range from 0.1 to 2.0 mm, preferably in the range from 0.2 to 1.6 mm.

9. Pneumatic vehicle tyre (10) according to one of Claims 1 to 8, wherein disposed between the tyre carcass (12) and the tread (30) is exactly one reinforcement ply (32) which comprises a multiplicity of rubberized reinforcing strength members, wherein the reinforcement ply (32) is selected from the group comprising belt plies and bandages, preferably belt plies.

10. Pneumatic vehicle tyre (10) according to one of Claims 1 to 8, wherein no reinforcement plies (32) are disposed in the pneumatic vehicle tyre (10) between the tread (30) and the tyre carcass (12), wherein the pneumatic vehicle tyre (10) preferably does not at any point comprise reinforcement plies (32) that comprise a multiplicity of rubberized reinforcement strength members.

## Revendications

1. Pneu de véhicule (10), comprenant :
a) une carcasse (12) de pneu présentant un premier flanc (16) s'étendant à partir d'un premier talon (14) de pneu, un deuxième flanc (20) s'étendant à partir d'un deuxième talon (18) de pneu et une zone centrale (22) agencée entre celles-ci, comprenant une première nappe carcasse (24) et une deuxième nappe carcasse (26) qui comprennent chacune une multitude de renforts (28a-d) caoutchoutés, qui s'étendent à chaque fois à travers le premier flanc (16), le deuxième flanc (20) et la zone centrale (22) de la carcasse (12) de pneu et
b) une bande de roulement (30) radialement externe par rapport à la carcasse (12) de pneu,
dans lequel au plus une nappe de consolidation (32), qui comprend une multitude de renforts consolidés caoutchoutés, est agencée entre la carcasse (12) de pneu et la bande de roulement (30),
dans lequel au moins une partie des renforts (28a-d) caoutchoutés de la première nappe carcasse (24) et de la deuxième nappe carcasse (26) présente, par rapport à la direction périphérique du pneu (10) de véhicule, dans le premier flanc (16) et dans le deuxième flanc (20), un angle de corde dans la plage de 80° à 90° et, dans la zone centrale (22), un angle de corde dans la plage de 5° à 75°, **caractérisé en ce que**
la proportion massique combinée de la première nappe carcasse (24) et de la deuxième nappe carcasse (26) dans le pneu (10) de véhicule se situe dans la plage de 6 à 20%, par rapport à la masse du pneu (10) de véhicule.

2. Pneu (10) de véhicule selon la revendication 1, dans lequel la proportion massique combinée de la première nappe carcasse (24) et de la deuxième nappe carcasse (26) dans le pneu (10) de véhicule se situe dans la plage de 8 à 18%, de préférence dans la plage de 10 à 16%, par rapport à la masse du pneu (10) de véhicule.

3. Pneu (10) de véhicule selon l'une des revendications 1 ou 2, dans lequel la proportion massique combinée de la première nappe carcasse (24) et de la deuxième nappe carcasse (26) dans le pneu (10) de véhicule se situe dans la plage de 13 à 20%, de préférence dans la plage de 15 à 20%, par rapport à la masse du pneu (10) de véhicule, lorsque le pneu (10) de véhicule ne comporte pas de nappe de consolidation (32),
ou
dans lequel la proportion massique combinée de la première nappe carcasse (24) et de la deuxième nappe carcasse (26) dans le pneu (10) de véhicule se situe dans la plage de 6 à 13%, de préférence dans la plage de 6 à 12%, par rapport à la masse du pneu (10) de véhicule, lorsque le pneu (10) de véhicule comporte une nappe de consolidation (32).

4. Pneu (10) de véhicule selon l'une des revendications 1 à 3, dans lequel la proportion massique de la première nappe carcasse (24) dans le pneu (10) de véhicule se situe dans la plage de 3 à 10%, de préférence dans la plage de 4,5 à 9%, de manière particulièrement préférée dans la plage de 6 à 8,5%, par rapport à la masse du pneu (10) de véhicule,
et/ou
dans lequel la proportion massique de la deuxième nappe carcasse (26) dans le pneu (10) de véhicule se situe dans la plage de 3 à 10%, de préférence dans la plage de 4,5 à 9%, de manière particulièrement préférée dans la plage de 6 à 8,5%, par rapport à la masse du pneu (10) de véhicule,

5. Pneu (10) de véhicule selon l'une des revendications 1 à 4, dans lequel au moins une partie des renforts (28a-d) caoutchoutés, de préférence l'ensemble de ces renforts, de la première nappe carcasse (24) et de la deuxième nappe carcasse (26), par rapport à la direction périphérique du pneu (10) du véhicule, présente, dans la zone centrale (22), un angle de corde dans la plage de 15° à 55°, de manière particulièrement préférée dans la plage de 20° à 35°.

6. Pneu (10) de véhicule selon l'une des revendications 1 à 5, dans lequel les renforts (28a-d) caoutchoutés de la première nappe carcasse (24) dans la zone centrale (22) forment, avec les renforts (28a-d) caoutchoutés de la deuxième nappe carcasse (26), un angle orienté dans la direction périphérique qui représente la somme des différents angles de corde.

7. Pneu (10) de véhicule selon l'une des revendications 1 à 6, dans lequel les renforts (28a-d) de la première nappe carcasse (24) et/ou de la deuxième nappe carcasse (26) sont des renforts textiles ou des renforts métalliques, en particulier des renforts en acier, de préférence des renforts textiles présentant au moins un fil, le fil étant de manière particulièrement préférée constitué d'un matériau qui est choisi dans le groupe constitué par l'aramide, le poly(téréphtalate d'éthylène), la polyéthercétone, la polycétone, le poly(naphtalate d'éthylène), la rayonne, la viscose, les fibres de carbone, les fibres naturelles, les fibres de verre et le PBO (poly(p-phénylène-2,6-benzobisoxazole)), de manière tout particulièrement préférée choisi dans le groupe constitué par l'aramide, le poly(téréphtalate d'éthylène) et la rayonne.

8. Pneu (10) de véhicule selon l'une des revendications 1 à 7, dans lequel les renforts (28a-d) de la première nappe carcasse (24) et/ou de la deuxième nappe carcasse (26) présentent un diamètre moyen dans la plage de 0,1 à 2,0 mm, de préférence dans la plage de 0,2 à 1,6 mm.

9. Pneu (10) de véhicule selon l'une des revendications 1 à 8, dans lequel est agencée exactement une nappe de consolidation (32) entre la carcasse (12) de pneu et la bande de roulement (30), laquelle nappe comprend une multitude de renforts consolidés, la nappe de consolidation (32) étant choisie dans le groupe constitué par les nappes ceintures et les bandages, de préférence les nappes ceintures.

10. Pneu (10) de véhicule selon l'une des revendications 1 à 8, dans lequel aucune nappe de consolidation (32) n'est agencée dans le pneu (10) du véhicule entre la bande de roulement (30) et la carcasse (12) de pneu, le pneu (10) de véhicule ne comprenant de préférence, en aucun endroit, une nappe de consolidation (32) qui comprend une multitude de renforts consolidés caoutchoutés.
